# EUROPEAN PATENT APPLICATION

(11) **EP 1 055 611 A2**
(43) Date of publication of application: **29.11.2000**
(21) Application number: 00110226.8
(22) Date of filing: 18.05.2000
(51) Int. Cl.: B65D 65/40

(54) **Composite film for packages, and apparatus for the production thereof**

(30) Priority: 25.05.1999 IT PD990113
(71) Applicant: BP Europack S.P.A., 36030 Lugo di Vicenza (IT)
(72) Inventor: Sterner, Marion, 30122 Venezia (IT); Trani, Giorgio, 30122 Venezia (IT); Visona, Sergio, 36010 Chiuppano (Vicenza) (IT); Razeti, Marco, 35143 Padova (IT)
(74) Representative: Modiano, Guido, Dr.-Ing.

(57) **Abstract**

A composite film of flexible material which comprises at least two base films (11,12,39,41) which are mutually coupled in partial regions and form, in the excluded regions, a plurality of raised chambers (13,14,42,43) which contain a gas or a fluid. The chambers (13,14) are much longer than wide, and in the resulting composite film the chambers are arranged in sets in which they are aligned; the sets are uniformly alternately distributed on the composite film (10) so that the chambers (13,14) of different sets have alignments which are set at an angle to each other.

## Description

The present invention relates to a composite film of flexible material, particularly suitable for producing self-supporting containers.

Materials such as plastic films having one or more layers have become widely used in the field of packaging, and particularly in the field of the packaging of liquid and/or granular products, for example food products, for the production of the containers.

From the point of view of production, it is convenient for the film to be lightweight, thin and flexible so that it can be stored in rolls and processed with conventional manufacturing machines.

However, a film having these characteristics allows to produce mainly bags, which have no definite shape, and the resulting package is not self-supporting.

By way of example, with a conventional film it is not possible to produce box-like containers having sufficient dimensional stability.

For this reason, when containers having these characteristics are required, it is necessary to use different raw materials and production technologies which use rigid or semirigid materials combined with flexible materials and with stiffening structures.

However, this entails several problems linked to costs and productivity.

Providing self-supporting structures and combining them with lightweight films in fact entails the need to acquire very expensive and diversified plants, while storage of the materials is not easy if it is not possible in roll form.

The aim of the present invention is to provide a composite and flexible film, mainly made of light plastics, which can be processed with conventional manufacturing machines and allows to produce containers having a stable shape of their own.

A consequent primary object is to provide a composite film which is flexible enough to be stored in rolls.

A further object is to provide a composite film formed by a plurality of base films, some dedicated to achieving mechanical characteristics and others dedicated to obtaining physical characteristics, such as tightness to light, gases, liquids, etcetera.

These and other objects which will become better apparent hereinafter are achieved by a composite film of flexible material, characterized in that it comprises at least two base films, each having one or more layers, which are mutually coupled by thermal bonding in partial regions which form, in the excluded regions, a plurality of raised chambers which contain a gas or a fluid, said chambers being much longer than wide, the resulting composite film having said chambers arranged in sets in which they are aligned, said sets being uniformly alternately distributed on the composite film so that the chambers of different sets have alignments which are set at an angle to each other.

The invention also comprises particular apparatuses to be installed on the composite film production line, in order to eliminate the raised chambers after they have been formed, and particular suction calenders in order to provide the chambers "in register" only in preset regions of the composite film.

The film according to the invention is flexible enough to be stored in rolls, and the containers that can be obtained have a sufficient rigidity, which is greater in the two directions arranged at an angle to each other, for example at right angles, which coincide with the longitudinal dimensions of said chambers, allowing to obtain containers having good characteristics in terms of autonomously maintaining their shape.

Further characteristics and advantages of the invention will become better apparent from the description of some embodiments, illustrated only by way of non-limitative example in the accompanying drawings, wherein:
Figure 1 is a schematic view of a first basic arrangement of the chambers formed in the composite film;
Figure 2 is a view of two single chambers, in order to exemplify their arrangement and their dimensional characteristics;
Figure 3 is a sectional view, taken along the line III-III of Figure 2;
Figure 4 is a view of a second configuration of the chambers provided in the film;
Figure 5 is a view of a third configuration of the chambers provided in the film;
Figure 6 is a view of a different configuration of the chambers arranged at angles other than 90°;
Figure 7 is a view of a version in which two base films, each prepared with its own chambers, are coupled, said version being shown before coupling;
Figure 8 is a front view of the composite film of Figure 7;
Figure 9 is a sectional view of the composite film of Figure 8;
Figure 10 is an exemplifying sectional view of a box-like container obtained with a composite film according to the invention;
Figure 11 is a view of the container of Figure 10, showing the arrangement of the chambers;
Figure 12 is an enlarged-scale sectional view of a composite film obtained with two base films;
Figure 13 is an enlarged-scale sectional view of a composite film obtained with three base films;
Figure 14 is an exemplifying view of the forming of the chambers on a composite film constituted by two base films;
Figure 15 is an exemplifying view of a production line of a composite film constituted by four base films;
Figure 16 is a view of the production of a composite film with localized bands in which the chambers are compressed in order to provide processing regions during the manufacture of the container;
Figure 17 is a front view of a film of the type obtained according to what is shown in Figure 16;
Figure 18 is a view of a composite film with regions without chambers arranged "in register" so as to allow different processes and/or in order to obtain different local consistencies;
Figure 19 is a view of a calender equipped for forming chambers on a base film and provided with means for producing regions "in register" without chambers;
Figure 20 is a view of another type of composite film with regions without chambers and with chambers differently arranged "in register";
Figure 21 is a view of a calender which is modular so as to allow maximum versatility and reduce plant costs.

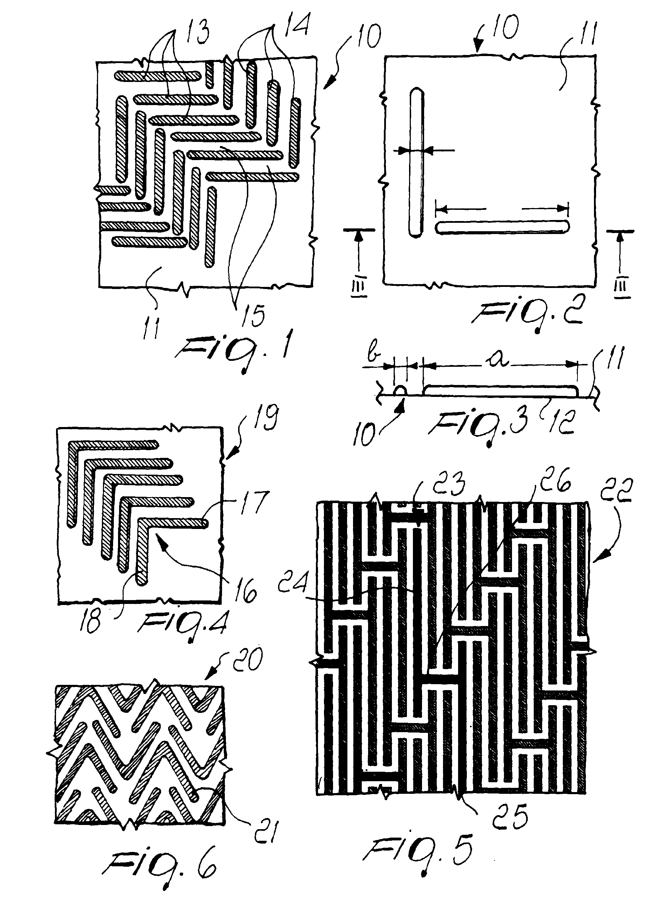

With reference to the above figures, Figure 1 is a view of a composite film, generally designated by the reference numeral 10, which is obtained by means of two base films, referenced respectively as upper film 11 (with respect to the sectional view of Figure 3), and lower film 12.

Two pluralities of chambers, respectively designated by the reference numerals 13 and 14, are formed in the upper base film 11 with a method described hereinafter; in the illustrated case, said chambers are mutually identical and the chambers 13 are arranged at 90° to the chambers 14.

In the illustrated case, the chambers have the same dimensions and shape and their larger dimension "a" is much greater than their smaller dimension "b".

These dimensions are shown schematically in Figures 2 and 3.

The resulting composite film 10 has a much higher resistance to bending stress along the two main directions of arrangement of the chambers 13 and 14 of the base film 11.

The thermal bonding of the two base films 11 is provided in the intermediate regions between the chambers, designated by the reference numeral 15 in Figure 1.

In this manner, all the chambers 13 and 14 are mutually independent and any cutting of the composite film performed in order to obtain parts which match the shape of a container to be produced leaves open only a small number of chambers.

Figure 4 illustrates a different configuration of the chambers.

In this case, the chambers, now designated by the reference numeral 16, are L-shaped with two substantially identical wings 17 and 18 which are much longer than wide as in the preceding case.

In this case also, two preferential directions of resistance to bending stress of the composite sheet, now designated by the reference numeral 19, are produced.

Figure 6 illustrates another equivalent configuration of a composite sheet, now designated by the reference numeral 20, in which the chambers, now designated by the reference numeral 21, are individually V-shaped and are arranged so as to generate in any case preferential directions of arrangement of the wings of the V-shapes which provide greater mechanical resistance to bending stress.

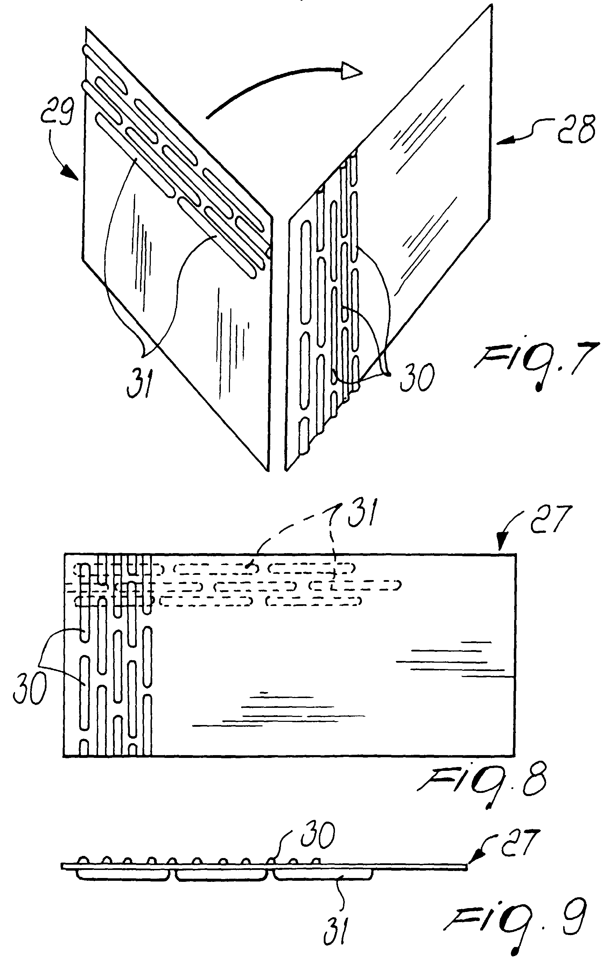

Figure 5 illustrates another configuration of the arrangement of the chambers.

In this case, the composite film, now designated by the reference numeral 22, has a plurality of chambers, one of which is highlighted and designated by the reference numeral 23.

In this case, the chamber is shaped like an asymmetrical letter H in which the two wings that lie vertically with respect to the figure and are designated by the reference numerals 24 and 25 are connected by a transverse chamber 26 which is shorter than the wings 24 and 25.

In this case also, the wings 24 and 25 and the chamber 26 are much longer than wide.

This solution, too, provides two mutually perpendicular directions with increased resistance.

Figure 7 illustrates another embodiment of a composite film, now generally designated by the reference numeral 27.

In this case, the composite film 27 is obtained by means of two base films 28 and 29, each of which is in turn composed of two mutually coupled layers in which there are vertical chambers 30 in the base film 28 and horizontal chamber 31 in the base film 29 (the terms "horizontal" and "vertical" relate to Figures 7 and 8 and refer to the main dimension of the chamber).

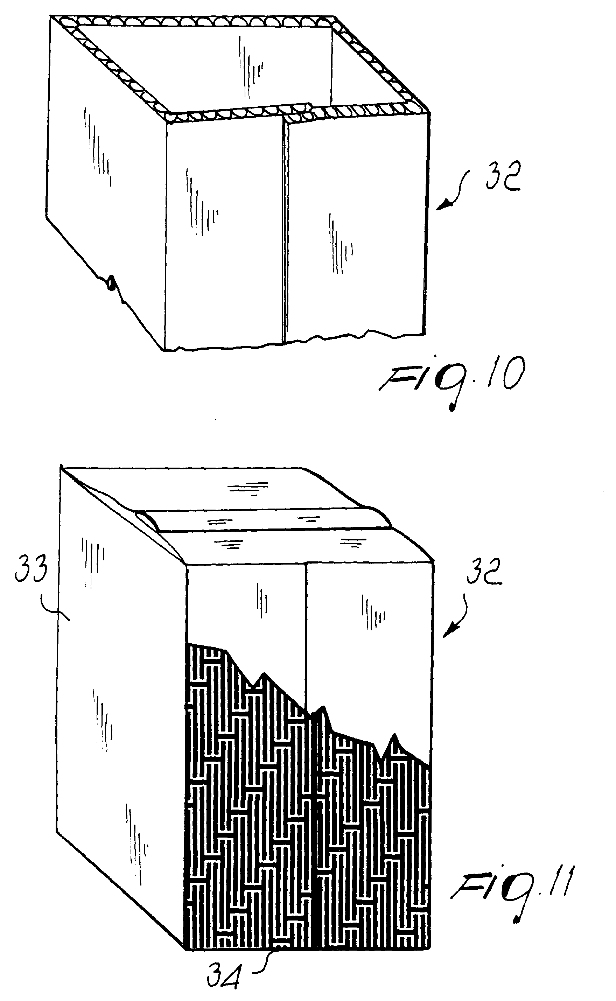

The base films 28 and 29 are mutually coupled in order to obtain the composite film 27 shown in Figures 8 and 9; as clearly noticeable, the chambers, designated by the reference numerals 30 and 31 respectively, are arranged so that their greater dimensions are mutually perpendicular, thus producing two main directions of resistance to bending stress.

The arrangement of the greater dimensions of the chambers 30 and 31 may of course be different and may not form an angle of 90° but a different angle.

In any case, it is important that there is an angle in the arrangement, so as to produce two directions of increased resistance.

Figures 10 and 11 illustrate a box-like container obtained with a known type of technology and with conventional manufacturing machines.

As clearly shown, this case exemplifies a container, generally designated by the reference numeral 32, which is produced by using the composite film shown in Figure 5.

Manufacture is performed by ensuring that the wings designated by the reference numerals 24 and 25 in Figure 5 are arranged so that their greater dimension is parallel to the vertical edges 33 of the container 32.

Since this is a box-like container, the transverse chambers 26 are parallel to the base edges 34 of said container.

The distribution of the chambers on the walls of the container 32 provides good resistance to bending stress in the two perpendicular directions that coincide with the edges of said container, so that the container has good shape stability and is thus able to support itself.

Figure 12 is an enlarged-scale sectional view of a composite film according to the invention.

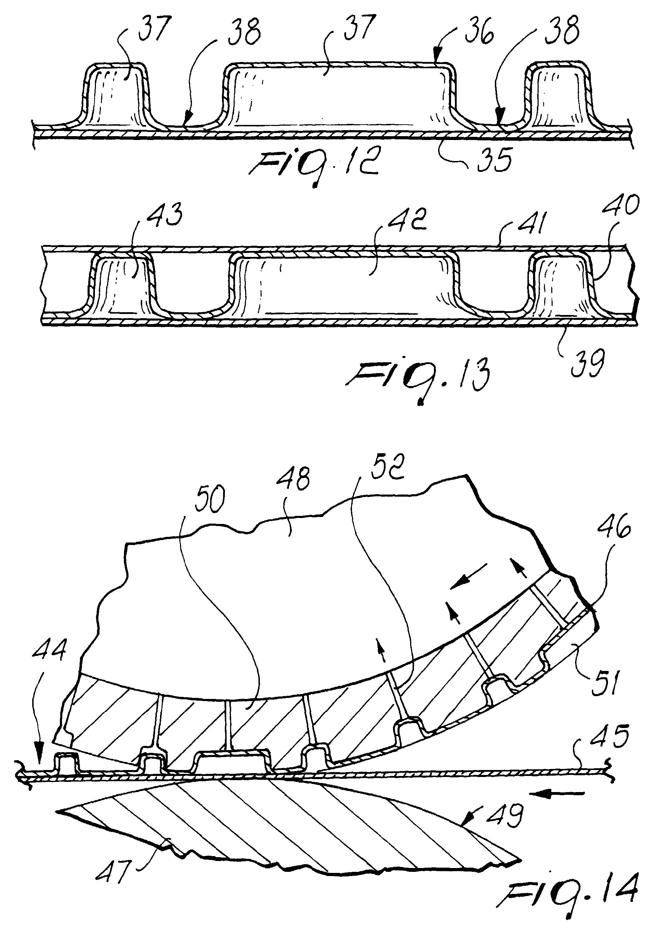

In this case (relative to the drawing), there is a base film 35 which is substantially flat, i.e., not deformed, which is coupled to a base film 36 which has a plurality of chambers 37 which are obtained by suction calendering, shown in Figure 14.

Between the chambers there are regions, designated by the reference numeral 38, where the two base films 35 and 36 are coupled by thermal bonding.

Figure 13 illustrates a composite film obtained by means of the coupling of three base films, designated by the reference numerals 39, 40 and 41.

Again with respect to the drawing, the films 39 and 41 are substantially flat, i.e., not deformed, while the base film 40 is deformed in order to obtain a plurality of chambers, again arranged as shown earlier and designated by the reference numerals 42 and 43.

Figure 14 schematically illustrates the method for obtaining a composite film, now designated by the reference numeral 44, which is obtained by coupling a first base film 45 and a second base film 46.

The two base films 45 and 46 are passed between two calendering rollers, designated by the reference numerals 47 and 48 respectively.

The rollers 47 has a smooth outer surface 49 and makes contact with the first base film 45.

The second calendering roller 48 is hollow and has an external drum 50, on the outer surface of which there are cavities 51 which are shaped like the chambers to be obtained.

Each one of said cavities 51 is connected, by means of ducts 52, to the inside of the roller 48, where a suction system, not shown, produces sufficient suction.

The base film 46, whose temperature does not give it a stable shape, adapts to the cavities 51 of the roller 48, while when it passes at the point of tangency between the rollers 47 and 48 the two base films 45 and 46 are subjected to thermal bonding in all the region of the film where there are no cavities 51.

At the exit of the rollers, and as a consequence of the cooling of the film 44, a film such as the one shown in Figure 12 is obtained in the illustrated case.

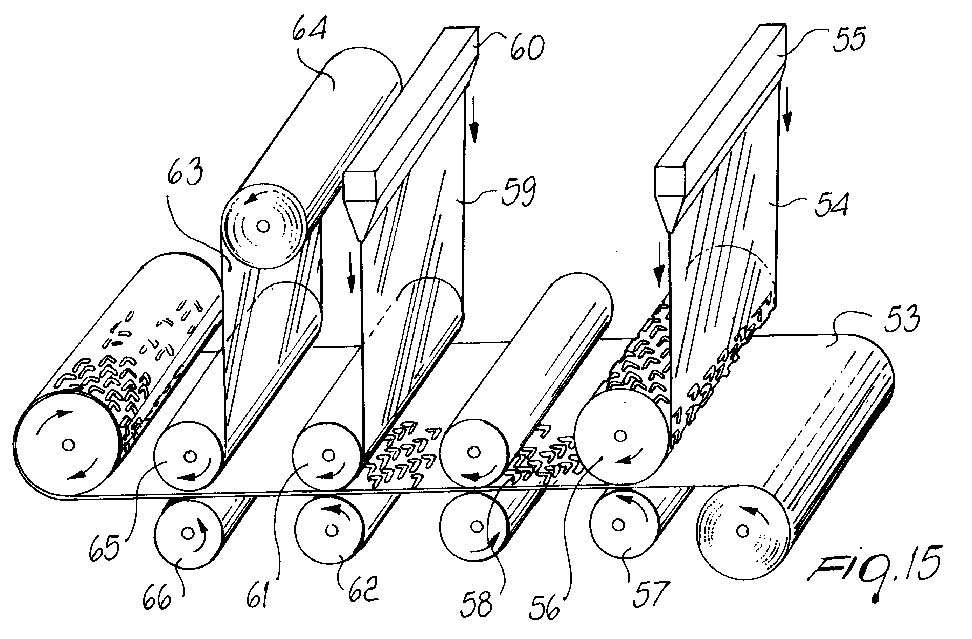

Figure 15 illustrates a more complex production line in which four base films are used.

A second base film 54, produced by a continuous linear extruder 55, is coupled by thermal bonding on a first base film 53.

The base film 54, in contact with a first calender 56 which acts against a contrast roller 57, is processed so as to obtain a plurality of chambers 58 having a shape and a structure of the type already described.

A third base film 59, obtained with a second continuous linear extruder 60, is then coupled above the second base film 54 by a second calender 61 which acts on a contrast roller 62.

Then a third base film 63, prepared beforehand and unwound from a roll 64, is coupled to the base film 59 by means of a calender 65 which acts on a contrast roller 66.

In this manner a composite film is obtained being composed of four base films, at least one of which, the one designated by the reference numeral 54, has the dimensional stiffening chambers, while the other two, i.e., the one designated by the reference numeral 59, and the one designated by the reference numeral 63, not only increase mechanical stability but also act as a barrier to agents of various kinds and therefore are tailored to the container, or rather to the contents that will be placed in a container produced with said composite film.

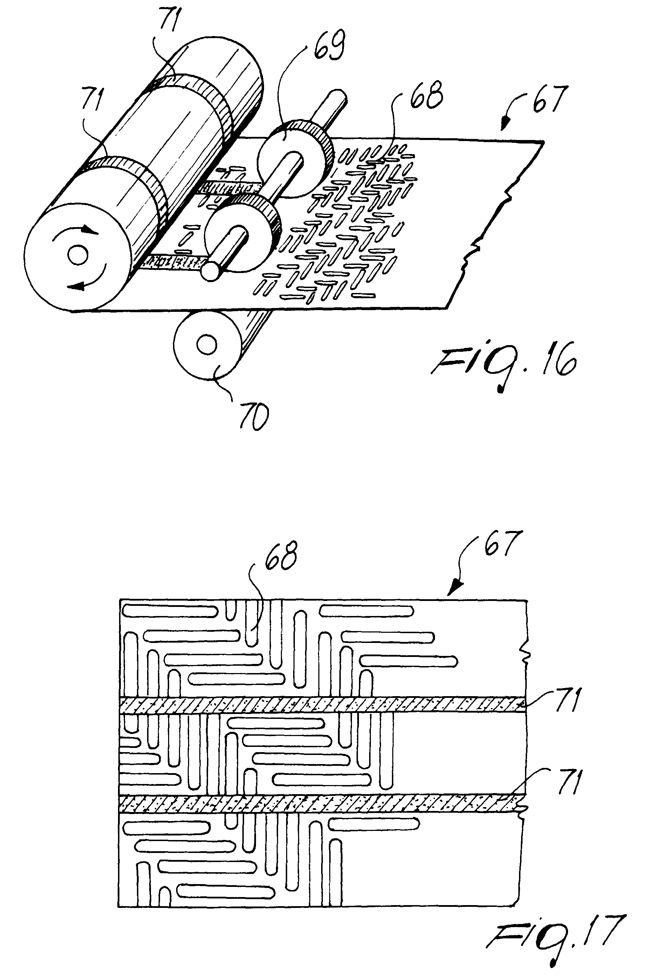

Figure 16 schematically illustrates another operation which is possible in the already-prepared composite film, now designated by the reference numeral 67.

In this case, the composite film 67, on which the stiffening chambers 68 have already been provided, passes between heated rollers 69 and a contrast roller 70.

This operation compresses and subjects to thermal bonding the chambers located at the rollers, thus obtaining bands 71 without chambers which are located in regions in which, during the subsequent manufacture of a container, it is necessary or convenient not to have raised portions, for example in order to allow multiple overlapping of the film by folding in order to obtain ribs for strengthening the container.

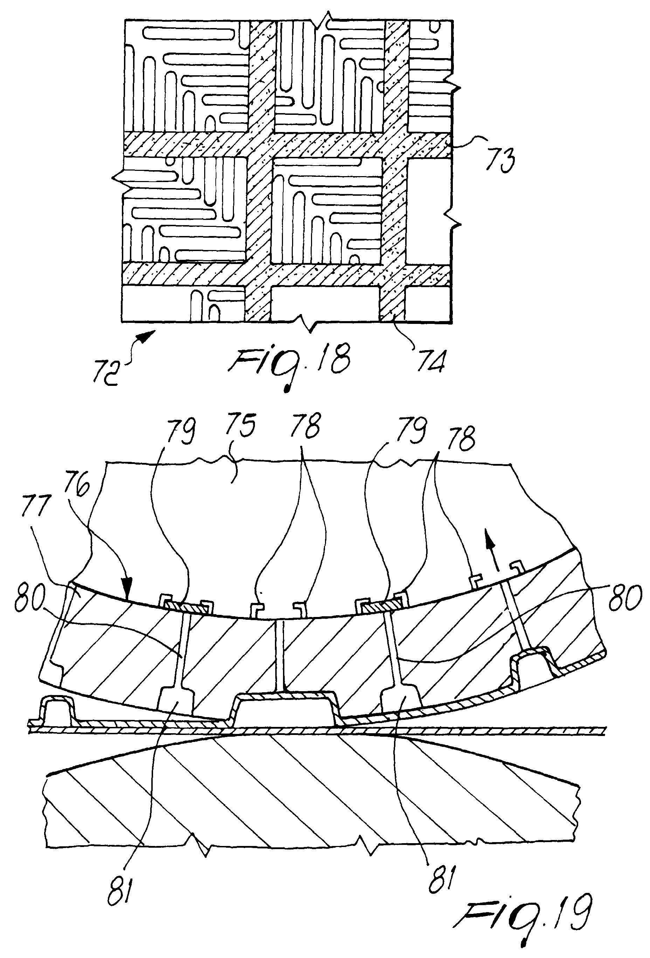

Figure 18 illustrates a composite film with longitudinal chamber-free regions, designated by the reference numeral 73, which can be obtained for example as shown in Figure 16, and transverse chamber-free regions, designated by the reference numeral 74.

Said regions 73 and 74 are arranged "in register" and allow to obtain composite films which are "dedicated" to the manufacture of particular containers in which it is necessary or convenient to provide localized processes which would be altered by the presence of raised chambers.

Figure 19 illustrates one way of obtaining transverse chamber-free regions 74 with a suction calender 75 which can be adapted to each individual situation.

On the inner surface 76 of the drum 77 of the calender 75 there are longitudinal fixing means 78 (at least local ones) which allow to arrange strips 79 which block all the suction holes 80 of a certain region arranged along a generatrix of the drum 77.

In this manner, the cavities such as the one designated by the reference numeral 81 are not affected by suction and therefore do not produce raised chambers.

This exemplifying embodiment (the strips 79 may also have any shape, for example curved or with variable width) allows to create a plurality of regions, such as the ones designated by the reference numerals 74 and 75, which are arranged "in register" without having to have an individual calender for each new register.

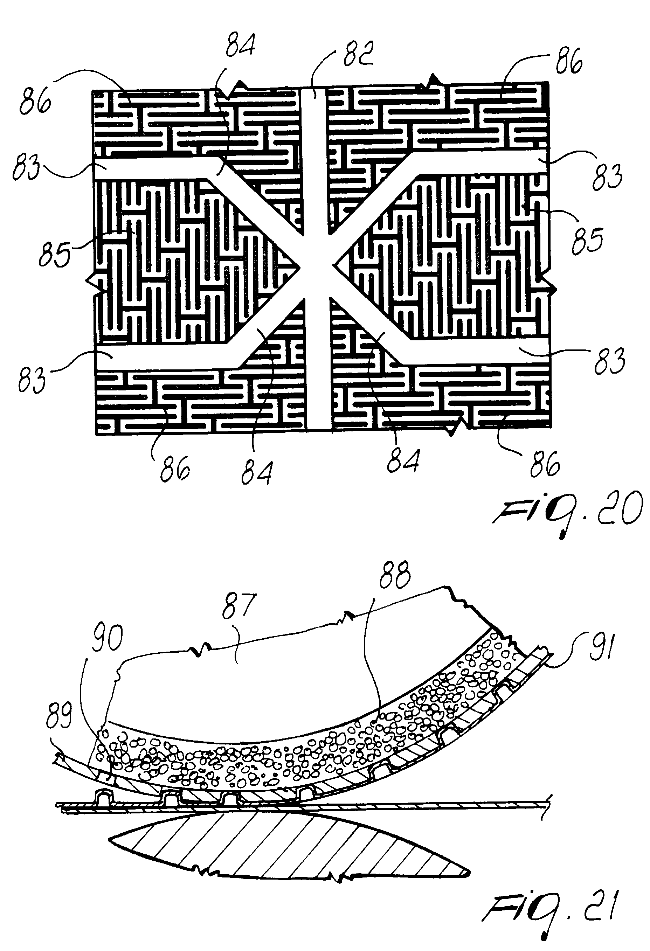

Figure 20 illustrates a composite film in which there are regions without transverse chambers 82, longitudinal chambers 83 and inclined chambers 84; these references being always made with respect to the direction of advancement of the production line.

This film also shows the possibility to have, in different areas designated by the reference numerals 85 and 86, chambers which are orientated in a different manner or even have a different pattern.

In view of the diversity of the shape and arrangement of the chambers, it can be convenient to use modular forming calenders such as the one shown by way of example in Figure 21.

In this example, the forming calender 87 has an air-permeable porous drum 88.

A jacket 89 is fixed on this drum; said jacket is preferably metallic and has a plurality of shaped holes, one of which is designated by the reference numeral 90, which are shaped like the chambers to be obtained in the base film 91.

The suction is transmitted to all the shaped holes 89, regardless of their shape and arrangement, through the porous drum 88.

The shaped holes 89 can be provided by laser cutting, which makes it very cheap to produce the jackets 91, which are always fitted on the same drum 88.

From the above description and the figures it is evident that the intended aim and all the objects have been achieved, and that in particular a flexible composite film which can be stored in rolls has been obtained which allows to produce containers having sufficient dimensional stability, since the chambers that are present in one or more of the base films are shaped and distributed so as to provide greater marked resistance to bending stress in preset directions.

The base films also may be obtained by coupling multiple source films, some of which may have characteristics which are not relevant to the mechanical strength of said film but have characteristics for optimizing the composite film according to the use for which it will be subsequently intended.

It is thus possible to provide films with a barrier function or films, for example external films, which are treated so as to have affinity for printing inks or similar products.

As mentioned, one of the advantages linked to the arrangement of the chambers is that in addition to defining two directions at an angle to each other in which there is higher resistance to bending stress, there is also the advantage that the cutting operations for manufacture do not damage a significant number of chambers and in any case have no effect on the mechanical strength of the resulting structure.

Further advantages are linked to impact resistance, which is due to the overlapping of base films and to the presence of the chambers filled with air or in any case with a gas or fluid.

Starting from the illustrated inventive concept, the shapes and dimensions that the chambers can assume may be various, and likewise the bands or regions in register that can be provided in order to obtain composite films dedicated to individual particular containers can be different and various.

The materials may of course be chosen in any case among those used in the production of plastic films.

The disclosures in Italian Patent Application No. PD99A000113 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A composite film of flexible material, characterized in that it comprises at least two base films (11,12,28,29,45,46,35,36), each having one or more layers, which are mutually coupled by thermal bonding (15) in partial regions which form, in the excluded regions, a plurality of chambers (13,14,16,21,23,42,43,37,68) which contain a gas or a fluid, said chambers being much longer than wide, said resulting composite film (10,20,22,27,44,67) having said chambers arranged in sets in which they are aligned, said sets being uniformly alternately distributed on the composite film (10,20,22,27,44,67) so that the chambers (13,14,16,21,23,42,43,37,68) of different sets have alignments which are set at an angle to each other, and an apparatus for the production line of said film, characterized in that it comprises heated rollers (69) which are suitable to eliminate already-formed raised chambers (68) and suction calenders (48,56,75) for forming chambers "in register" only in preset regions.

2. The composite film according to claim 1, characterized in that in a first embodiment said chambers (13,14) are substantially shaped like a parallelepiped, are much longer than wide, and are arranged in an orderly fashion in two sets, in which chambers (13) of the first set are alternately arranged, with reference to the longer dimension, at right angles to the chambers (14) of the second set.

3. The composite film according to claim 1, characterized in that in an equivalent second embodiment the chambers (16,21) and the sets orientated in different manners are obtained by giving said chambers an L-like or V-like shape, the wings (17,18) of which are always much longer than wide.

4. The composite film according to claim 1, characterized in that said chambers (23) are shaped, in plan view, like an asymmetrical H, in which the parallel wings (24,25) are longer than the transverse chamber (26) that connects them and in any case the length of the parallel wings (24,25) and of the chamber (26) that connects them is much greater than the transverse dimension of said chambers (24,25,26).

5. The composite film according to claim 1, characterized in that it is obtained by coupling two two-layer films (28,29), each one of said films having a plurality of elongated chambers (30,31) which are arranged in an equal arrangement, and in that the coupling is provided so that the chambers of a first two-layer film are arranged at an angle to the chamber of the second two-layer film.

6. The composite film according to claim 1, characterized in that it is obtained by the coupling of three base films (39,40,41), of which two (39,41) are substantially not deformed and one, the intermediate one (40), has a plurality of chambers (42,43) obtained by plastic deformation produced by suction calendering.

7. The composite film according to claim 1, characterized in that it is obtained by coupling two base films (45,46) between a calender (48) with surface recesses (51) which correspond to the shape of the chambers to be obtained, said recesses (51) being connected to the inside of the calender (48), to which suction is applied, and a contrast roller (47).

8. The composite film according to claim 1, characterized in that it has parallel bands (71) of appropriate width in which the chambers (68) are compressed by heated rollers (69) so as to obtain regions which, during manufacture, are suitable for particular operations for overlap thermal bonding without the interference or hindrance of the presence of raised chambers (68).

9. The composite film according to claim 1, characterized in that it has regions (73,74) in which said chambers have been eliminated by compression, said regions (73,74) being "in register", i.e., having shapes suitable for subsequent processes on specific containers.

10. A composite film according to any of the preceding claims, characterized in that it has a flexibility such that it can be stored in rolls and processed with ordinary manufacturing machines.

11. The composite film made of flexible material according to claim 1, characterized in that it comprises multiple base films (53,54,59,63), some of which are dedicated to the provision of mechanical and structural stiffening chambers (58), other films being dedicated to the provision of barriers against light, liquids, gases or fluids, etcetera.

12. An apparatus to be interposed in a line for producing a composite film, according to claim 1, of the type that comprises at least one calender (48,56) with suction cavities (51) which are shaped complementarily to the chambers (58,68) to be obtained and are provided on the surface with which a first base film (45,53) makes contact, characterized in that it comprises, downstream of said calender (48,56) for forming the chambers (58,68), heated rollers (69) which compress and eliminate a plurality of chambers according to continuous longitudinal regions which correspond to regions (71) dedicated to subsequent processes which would be hindered by the presence of raised chambers.

13. An apparatus to be interposed in a line for producing a composite film, according to claim 1, characterized in that has a hollow calender (75) for forming said chambers, said calender (75) being provided with means (78) for positioning strips (79) which locally and transversely close a plurality of holes (80) which produce suction in a corresponding plurality of recesses (81) which form the chambers, so as to be able to produce regions (74,75) "in register" without raised chambers.

14. An apparatus to be interposed in a line for producing a composite film according to claim 1, characterized in that it has a hollow calender (87) which is constituted by a porous drum (88) on which a jacket (89) is fixed, said jacket (89) being provided with a plurality of shaped holes (90) which correspond to the raised chambers to be obtained, said shaped holes (90) being arranged so as to obtain regions "in register" which have no raised chambers.
